# EUROPEAN PATENT APPLICATION

(11) **EP 4 616 919 A1**
(43) Date of publication of application: **17.09.2025**
(21) Application number: 23887977.9
(22) Date of filing: 07.11.2023
(51) Int. Cl.: A63F 13/52, H04N 21/2187, H04N 21/478

(54) **RESOURCE PROCESSING METHOD AND APPARATUS, DEVICE, AND MEDIUM**

(30) Priority: 07.11.2022 CN 202211387746
(71) Applicant: Beijing Zitiao Network Technology Co., Ltd., Beijing 100190 (CN)
(72) Inventor: ZHANG, Xiaoxi, Beijing 100028 (CN); ZHU, Jiangjing, Beijing 100028 (CN); XIAO, Bingri, Beijing 100028 (CN)
(74) Representative: Isarpatent
(86) International application number: PCT/CN2023/130064
(87) International publication number: WO 2024/099288

(57) **Abstract**

Embodiments of the present disclosure relate to a method for resource processing and apparatus, a device, and a medium. The method includes: obtaining first target resource push information of a target game, wherein the first target resource push information is determined according to usage progress information of a viewing client on the target game; and displaying the first target resource push information of the target game on a live streaming interface. In the embodiments of the present disclosure, the corresponding first target resource push information is displayed according to the usage progress information of the viewing client, so that matching between the first target resource push information and the usage progress information is ensured. First target resource push information viewed from different viewing clients may be different, thereby enhancing a push effect on a game.

## Description

This application claims priority to Chinese Patent Application No. 202211387746.3, entitled "RESOURCE PROCESSING METHOD AND APPARATUS, DEVICE, AND MEDIUM" filed with the China National Intellectual Property Administration on November 7, 2022, which is incorporated by reference in its entirety.

### FIELD

The present disclosure relates to the technical field of computer applications, and in particular, to a method and apparatus, a device, and a medium for resource processing.

### BACKGROUND

With the development of a computer technology, pushing in the form of live streaming has become a common push method, such as, pushing a game in the form of live streaming.

In the related technology, to push a game, preset resource push information is displayed in a live streaming room. Thus, the resource push information of the live streaming room is displayed on a viewing client to achieve the push processing of the game.

However, according to the above method for displaying the preset resource push information in the live streaming room, resource push information viewed from different viewing clients is completely consistent, which affects a push effect on the game.

### SUMMARY

To solve the above technical problems or at least partially solve the above technical problems, the present disclosure provides a method and apparatus, a device, and a medium for resource processing.

Embodiments of the present disclosure provide a method for resource processing. The method is applied to a viewing client and includes: obtaining first target resource push information of a target game, wherein the first target resource push information is determined according to usage progress information of the viewing client on the target game; and displaying the first target resource push information of the target game on a live streaming interface.

The embodiments of the present disclosure provide a method for resource processing. The method is applied to a server and includes: in a case that a first resource push instruction from a streamer client for a target game has been received, determining usage progress information of a viewing client for the target game; determining first target resource push information of the target game according to the usage progress information; and sending the first target resource push information to the viewing client.

The embodiments of the present disclosure further provide an apparatus for resource processing. The apparatus is applied to a viewing client and includes: an obtaining module, configured to obtain first target resource push information of a target game, wherein the first target resource push information is determined according to usage progress information of the viewing client on the target game; and a display processing module, configured to display the first target resource push information of the target game on a live streaming interface.

The embodiments of the present disclosure further provide an apparatus for resource processing. The apparatus is applied to a server and includes: a first determining module, configured to: in a case that a first resource push instruction from a streamer client for a target game, determine usage progress information of a viewing client on the target game; a second determining module, configured to determine first target resource push information of the target game according to the usage progress information; and a sending module, configured to send the first target resource push information to the viewing client.

The embodiments of the present disclosure further provide an electronic device. The electronic device includes: a processor; and a memory configured to store instructions executable by the processor. The processor is configured to: read the executable instructions from the memory and execute the executable instructions to implement the method for resource processing provided in the embodiments of the present disclosure.

The embodiments of the present disclosure further provide a computer-readable storage medium, having a computer program stored thereon. The computer program is used for performing the method for resource processing provided in the embodiments of the present disclosure.

The embodiments of the present disclosure further provide a computer program product. Instructions in the computer program product, when executed by a processor, implement the method for resource processing provided in the embodiments of the present disclosure.

Compared with the related art, the technical solutions provided by the embodiments of the present disclosure have the following advantages:

The resource processing solution provided by the embodiments of the present disclosure obtains first target resource push information of a target game, the first target resource push information being determined according to usage progress information of a viewing client on the target game; and displays the first target resource push information of the target game on a live streaming interface.

### BRIEF DESCRIPTION OF THE DRAWINGS

The above and other features, advantages, and aspects of the various embodiments of the present disclosure will become more apparent by combining the accompanying drawings and referring to the following specific implementations. Throughout the accompanying drawings, identical or similar reference numerals represent identical or similar elements. It should be understood that the accompanying drawings are illustrative, and components and elements may not necessarily be drawn to scale.
FIG. 1 is a flowchart of a method for resource processing provided by an embodiment of the present disclosure;
FIG. 2 is a schematic diagram of a resource processing scenario provided by an embodiment of the present disclosure;
FIG. 3 is a schematic diagram of another resource processing scenario provided by an embodiment of the present disclosure;
FIG. 4 is a schematic diagram of another resource processing scenario provided by an embodiment of the present disclosure;
FIG. 5 is a schematic diagram of another resource processing scenario provided by an embodiment of the present disclosure;
FIG. 6 is a flowchart of another method for resource processing provided by the present disclosure;
FIG. 7 is a flowchart of another method for resource processing provided by the present disclosure;
FIG. 8 is a schematic diagram of another resource processing scenario provided by an embodiment of the present disclosure;
FIG. 9 is a schematic diagram of another resource processing scenario provided by an embodiment of the present disclosure;
FIG. 10 is a schematic structural diagram of an apparatus for resource processing provided by an embodiment of the present disclosure;
FIG. 11 is a schematic structural diagram of another apparatus for resource processing provided by an embodiment of the present disclosure; and
FIG. 12 is a schematic structural diagram of an electronic device according to the embodiments of the present disclosure.

### DETAILED DESCRIPTION OF EMBODIMENTS

The embodiments of the present disclosure will be described in detail below with reference to the accompanying drawings. Although the accompanying drawings show some embodiments of the present disclosure, it should be understood that the present disclosure can be implemented in various forms, and should not be explained as being limited to the embodiments stated herein. Rather, these embodiments are provided for understanding the present disclosure more thoroughly and completely. It should be understood that the accompanying drawings and embodiments of the present disclosure are only used for illustration, but are not intended to limit the protection scope of the present disclosure.

It should be understood that respective steps recorded in method implementations of the present disclosure can be executed in different orders and/or in parallel. In addition, the method implementations may include additional steps and/or omit the execution of the steps shown. The scope of the present disclosure is not limited in this aspect.

The term "include" and its variants as used herein mean widespread inclusion, namely, "including but not limited to". The term "based on" is "based at least in part on". The term "one embodiment" means "at least one embodiment". The term "another embodiment" means "at least another embodiment". The term "some embodiments" means "at least some embodiments". Relevant definitions of other terms will be given in the description below.

It should be noted that the concepts such as "first" and "second" mentioned in the present disclosure are only used to distinguish different apparatuses, modules, or units, and are not intended to limit the order or interdependence of the functions performed by these apparatuses, modules, or units.

It should be noted that the modifications of "one" and "plurality" mentioned in the present disclosure are indicative rather than restrictive, and those skilled in the art should understand that unless otherwise explicitly stated in the context, they should be understood as "one or more".

Names of messages or information interacted between a plurality of apparatuses in the implementations of the present disclosure are only for illustrative purposes and are not intended to limit the scopes of these messages or information.

It should be noted that user or client information involved in the embodiments of the present disclosure should be valid information authorized to be obtained by a user having information ownership in the context of compliance with relevant laws and regulations.

To solve the above problems, the embodiments of the present disclosure provide a method for resource processing. In the method for resource processing, corresponding first target resource push information is generated according to usage progress information of a viewing client, so that matching between the first target resource push information and the usage progress information is ensured. First target resource push information viewed from different viewing clients may be different, thereby enhancing a push effect on a game.

The method will be introduced bellow in conjunction with specific embodiments mainly on a viewing client side.

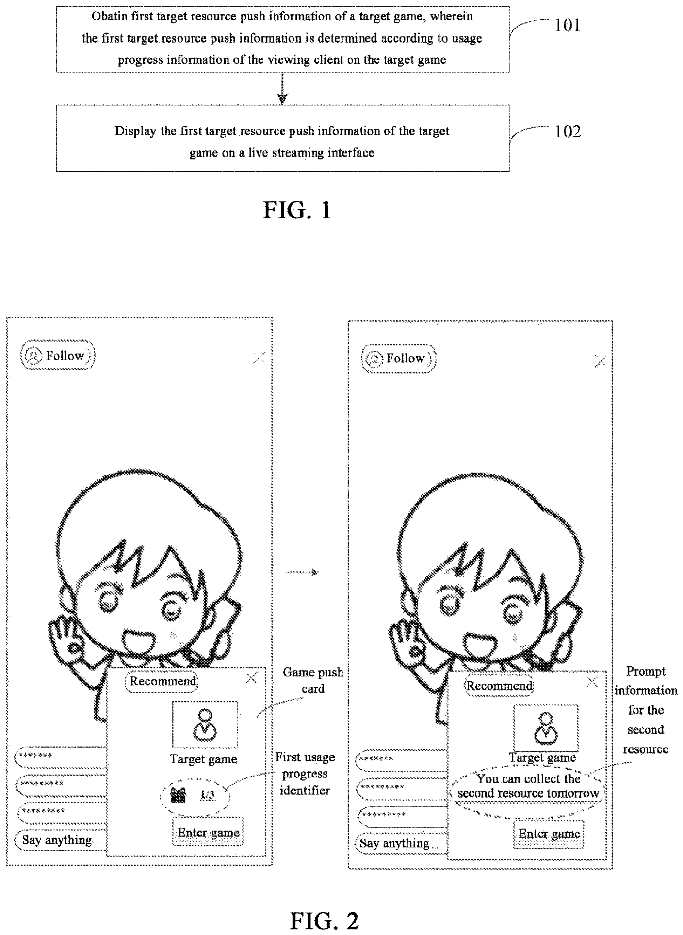

FIG. 1 is a flowchart of a method for resource processing provided by an embodiment of the present disclosure. The method can be performed by an apparatus for push processing. The apparatus can be implemented using software and/or hardware and may be usually integrated in an electronic device. As shown in FIG. 1, the method includes the following steps:
Step 101, first target resource push information of a target game is obtained. The first target resource push information is determined according to usage progress information of the viewing client on the target game.

In an embodiment of the present disclosure, the usage progress information of the viewing client on the target game is obtained, and the usage progress information of the viewing client corresponds to the target game. The usage progress information is used for representing usage progress information of the viewing client on the target game, and the usage progress information is used for indicating a progress of use of the game by a target user. For example, if the target game includes 10 levels, the usage progress information can be determined according to a level completion progress in the target game. For example, when one level of the target game has been completed on the viewing client, the usage progress information corresponding to the viewing client can be 1/10 of a usage progress. When two levels of the target game have been completed on the viewing client, the usage progress information corresponding to the viewing client can be 2/10 of the usage progress. When three levels of the target game have been completed on the viewing client, the usage progress information corresponding to the viewing client can be 3/10 of usage progress.

It is easy to understand that the usage progress information of different viewing clients on the target game varies. Therefore, for the viewing client, the usage progress information of the target game is used for targeted reminding, which is convenient for a user to know a progress and is conductive to enhancing a user experience.

Therefore, in an embodiment of the present disclosure, the first target resource push information is determined according to the usage progress information. The first target resource push information can be in any style such as a game card style and a virtual pendant style, which will not be listed here.

The first target resource push information in this embodiment may be a resource corresponding to the game, such as a game prop, a game gift, and another resource for increasing a degree of game completion. The first target resource push information may include a game identifier, e.g. a game name; a resource identifier, e.g. a resource icon; and a progress identifier, e.g. a progress identifier corresponding to current usage progress information of the client. The first target resource push information is any resource information that is adapted to the usage progress information and has a prompt effect. The first target resource push information is determined for the usage progress information, thus enhancing a push effect on the target game and increasing a possibility of interaction.

The usage progress information in this embodiment is updated in real time according to an actual scenario. In this embodiment, as shown in FIG. 2, when target resource information is displayed in a style of a game push card, in a case that the target game includes three levels, the first usage progress information may be that a user has completed the first level, which is 1/3 of the total number of the levels. A corresponding first usage progress identifier can be "1/3+gift icon". Then, a first usage progress identifier is displayed in the game push card. In response to a first resource corresponding to the first usage progress information being obtained, for example, in response to the first usage progress identifier being triggered to enter a get page for the first resource and the first resource which is, for example, game prop A being collected, the first usage progress identifier is switched into prompt information for collecting a second resource, The prompt information herein is transitional prompt information between the first resource and the second resource, such as "You can get the second resource tomorrow". The second resource is, for example, game prop B. Thus, after the prompt information is displayed, the prompt information can be switched to display a second usage progress identifier "2/3+gift icon" after a preset period of time. Or, at effective get time corresponding to second resource information, for example, when the usage progress information is second usage progress information, the first usage progress identifier is switched to the second usage progress identifier. The second usage progress information may be that the user has completed the first level and the second level, namely, 2/3 of the total number of the levels.

In an embodiment of the present disclosure, when the usage progress information is the first usage progress information, a first usage progress identifier is displayed on the live streaming interface. The first usage progress identifier may be in any style such as a digit, a letter, and text. In response to the usage progress information being updated to second usage progress information, the first usage progress identifier is switched into a second usage progress identifier.

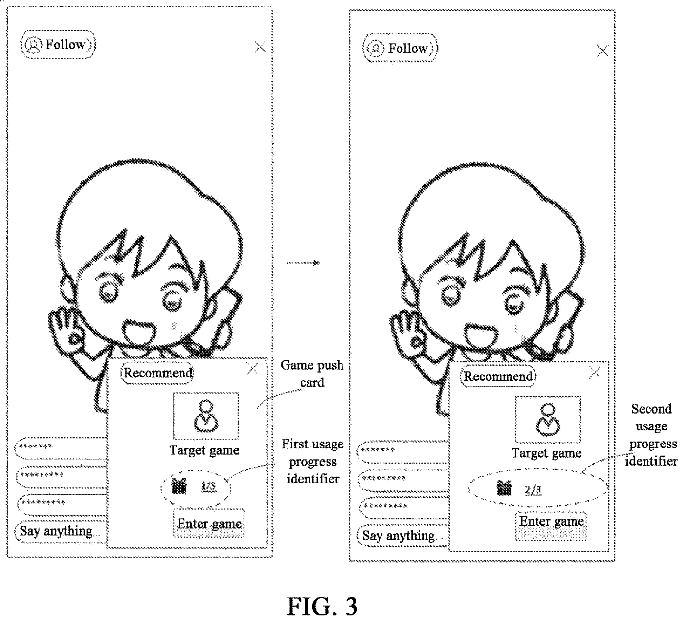

Continuing with the above embodiment taken as an example, as shown in FIG. 3, when the target resource information is displayed in a style of a game push card, if the first usage progress identifier is "1/3+gift icon", the first usage progress identifier is displayed in the game push card. Then, in response to the usage progress information being updated to the second usage progress information (for example, in response to the first resource corresponding to the first usage progress information being collected), the first usage progress identifier is switched into the second usage progress identifier. For example, "1/3+gift icon" is switched into "2/3+gift icon", which can visually indicate the current usage progress information.

Step 102: The first target resource push information of the target game is displayed on a live streaming interface.

In an embodiment of the present disclosure, after the first target resource push information is determined, the first target resource push information of the target game is displayed on the live streaming interface. Since the game push card is related to the usage progress information of the viewing client on the target game, when there is a plurality of viewing clients, first target resource push information displayed on the viewing clients corresponding to different usage progress information is different.

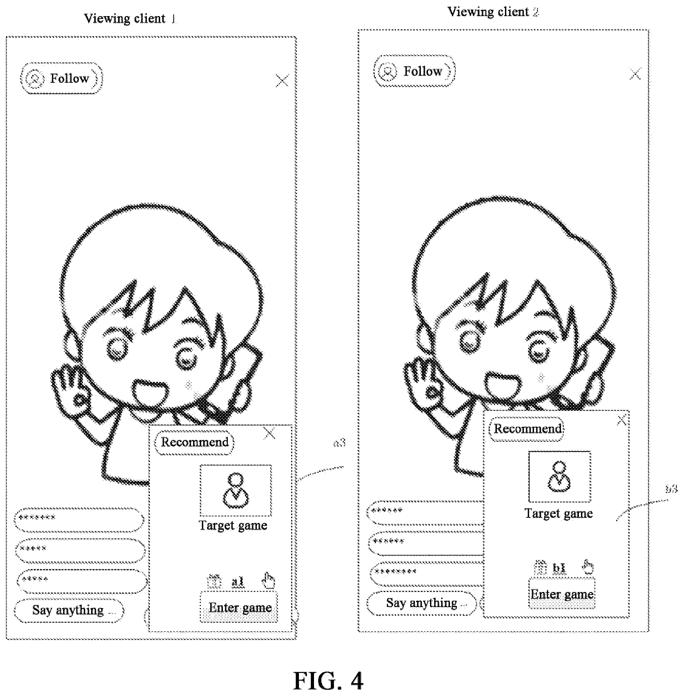

In some possible embodiments, when the display style of the first target resource push information is a game push card, as shown in FIG. 4, if the usage progress information of viewing client 1 on the target game is determined to be a1, the first target resource push information corresponding to a1 will be determined to be a2; if the usage progress information of viewing client 2 on the target game is determined to be b1, the first target resource push information corresponding to b1 is determined to be b2. Therefore, a game push card a3 is generated according to the first target resource push information a2, and a game push card b3 is generated according to the first target resource push information b2. Thus, the game push cards displayed on viewing client 1 and viewing client 2 may be different, which enhances a push effect on the target game.

In some possible embodiments, to further enhance the push effect on the target game, when the usage progress information is the first usage progress information, a first usage progress identifier is displayed on the live streaming interface. The first usage progress identifier may be in any style such as a digit, a letter, and text. In this embodiment, in response to a first resource corresponding to the first usage progress information being obtained, the first usage progress identifier is switched into prompt information for obtaining a second resource. The second resource is a resource corresponding to second usage progress information, and the second usage progress information is next progress information adjacent to the first usage progress. Thus, the corresponding resource information is adaptively changed according to changes in the usage progress information, and the prompt information is displayed for transitional reminding during resource changing, to further enhance the push effect on the target resource information. The first usage progress information and the second usage progress information can be understood as different usage progresses of the target game. Usually, the usage progress of the second use information is greater than the usage progress of the first use information.

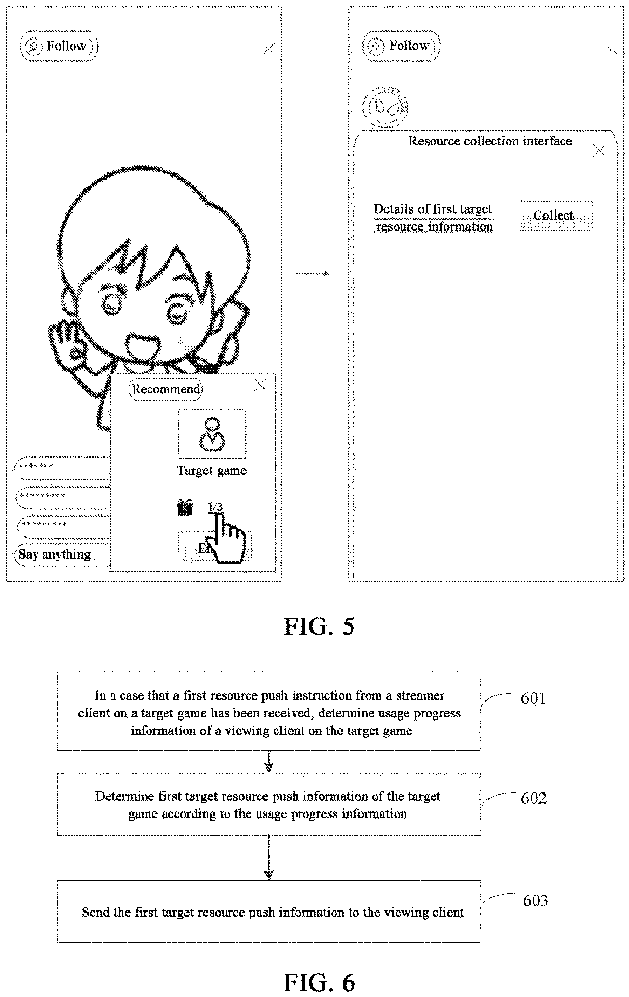

Based on the above embodiment, after the first target resource push information is displayed, as shown in FIG. 5, a resource collection interface corresponding to the target game can also be displayed in response to a triggering operation for the first target resource push information. The resource collection interface is used for providing a resource collection service corresponding to the first target resource push information, so as to get a corresponding resource on the resource collection interface. In some possible embodiments, continuing to refer to FIG. 5, resource details corresponding to the first target resource push information and a resource collection control corresponding to the first target resource push information are displayed on the resource collection interface; and a resource corresponding to the first target resource push information is obtained in response to a triggering operation for the resource collection control. Thus, direct push of related resources is achieved, and a push path of related resources of the target game is shortened.

In an embodiment of the present disclosure, a game interaction control of the target game can also be displayed on the live streaming interface. In response to a triggering operation for the game interaction control, a game presentation interface corresponding to the target game is displayed. For example, a control "Start Game" in FIG. 5 can be the game interaction control in this embodiment. Thus, a resource collection entry corresponding to the first target resource push information is displayed on the game presentation interface. The resource collection entry is used for collecting a resource corresponding to the first target resource push information. Namely, in this embodiment, the resource corresponding to the first target resource push information can be collected by entering the corresponding target game.

In summary, the method for resource processing provided by the embodiments of the present disclosure obtains first target resource push information of a target game, the first target resource push information being determined according to usage progress information of viewing client on the target game; and displays the first target resource push information of the target game on a live streaming interface. In the embodiments of the present disclosure, the corresponding first target resource push information is displayed according to the usage progress information of the viewing client, so that matching between the first target resource push information and the usage progress information is ensured. First target resource push information viewed from different viewing clients may be different, thereby enhancing a push effect on a game.

The method for resource processing provided by the embodiments of the present disclosure will be described below mainly on a server side.

FIG. 6 is a flowchart of another method for resource processing provided by the present disclosure. As shown in FIG. 6, the method for resource processing includes:
Step 601, in a case that a first resource push instruction from a streamer client for a target game has been received, usage progress information of a viewing client on the target game is determined.

In an embodiment of the present disclosure, a game push control is displayed on a live streaming interface of the streamer client. When a triggering operation performed through the streamer client for the game push control has been detected, the first resource push instruction for the target game is obtained. In this embodiment, in a case that the first resource push instruction from the streamer client for the target game has been received, the usage progress information of the viewing client on the target game is determined.

Step 602, first target resource push information of the target game is determined according to the usage progress information.

Step 603, the first target resource push information is sent to the viewing client.

In an embodiment of the present disclosure, the first target resource push information of the target game is determined according to the usage progress information, such as querying a preset database to determine the first target resource push information that is matched with the usage progress information. Thus, the first target resource push information is sent to the viewing client. Thus, the corresponding first target resource push information can be determined according to the usage progress information where the viewing client is located. The first target resource push information is any information that is adapted to the usage progress information and has a prompt effect. The first target resource push information is determined for the usage progress information, thus facilitating a user to fast obtain the usage progress information and the associated first target resource push information.

It should be noted that this embodiment of the present disclosure mainly explains the method for resource processing on a server, which corresponds to the method for resource processing mainly explained on the viewing client side. After the server side sends first target resource information/second target resource information to the viewing client, specific resource processing details executed by the viewing client can be found in the embodiment mainly described on the viewing client side, and will not be elaborated here.

In summary, the method for resource processing provided by this embodiment of the present disclosure determines usage progress information of a viewing client on the target game in a case that a first resource push instruction from a streamer client for a target game has been received, determines first target resource push information of the target game according to the usage progress information, and sends the first target resource push information to the viewing client. In the embodiments of the present disclosure, the corresponding first target resource push information is generated according to the usage progress information of the viewing client, so that matching between the first target resource push information and the usage progress information is ensured. First target resource push information viewed from different viewing clients may be different, thereby enhancing a push effect on a game.

In an actual execution process, the streamer client can actively distribute second target resource push information. The second target resource push information may be any information that can improve a usage rate of the target game and may be second target resource push information for presenting different target games to different viewing clients. This further enhances the push effect on the target game.

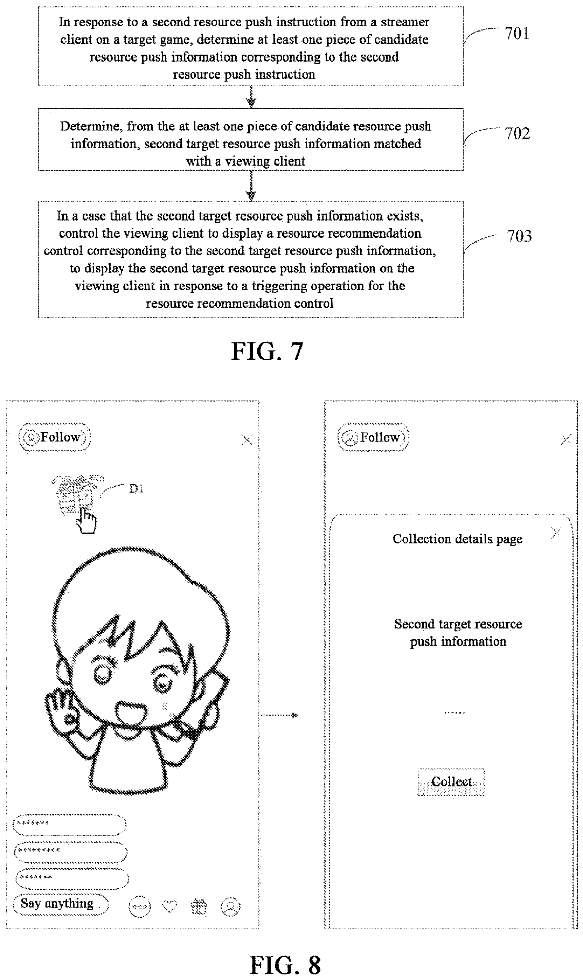

In an embodiment of the present disclosure, as shown in FIG. 7, the method further includes:
Step 701, in response to a second resource push instruction from the streamer client for the target game, at least one piece of candidate resource push information corresponding to the second resource push instruction is determined.

In an embodiment of the present disclosure, in response to the second resource push instruction from the streamer client for the target game, a push page of the target game can be called by triggering a corresponding push control in the streamer client. The push page may contain various pieces of candidate resource push information. After an issue control of the candidate resource push information is triggered in the streamer client, an issue instruction from the streamer client for resource push information is obtained. Issue manners of the streamer client for the resource push information of the target game can be set according to a specific scenario, and will not be listed one by one here. The candidate resource push information can be specific game resource information and the like associated with the target game.

Step 702, second target resource push information matched with the viewing client is determined from the at least one piece of candidate resource push information.

It is easy to understand that in an actual application scenario, the at least one piece of candidate resource push information issued by the streamer client may not necessarily be collected by each viewing client. Therefore, to further enhance the push effect, the second target resource push information that is matched with the viewing client is determined from the at least one piece of candidate resource push information. The second target resource push information can be understood as any resource information that is actively issued by the streamer client and corresponds to the target game, rather than being directly determined according to the usage progress information. An information type of the second target resource information can be the same or different from an information type of the first target resource information, which will not be limited. Similarly, the second target resource push information can also be a resource corresponding to the game, such as a game prop, a game gift, and another resource for increasing a degree of game completion.

It should be noted that in different application scenarios, manners for determining the second target resource push information that is matched with the viewing client are different. Examples are as follows:
In some possible embodiments, reference usage progress information corresponding to each piece of candidate resource push information is obtained. The reference usage progress information corresponding to each piece of candidate resource push information can be customized in advance. The reference usage progress information is matched with the usage progress information of the viewing client to determine the candidate resource push information corresponding to successfully matched reference usage progress information to be the second target resource push information. If the reference usage progress information is consistent with the usage progress information of the viewing client, it considers that the reference usage progress information is successfully matched with the usage progress information of the viewing client.

Step 703, in a case that the second target resource push information exists, the viewing client is controlled to display a resource recommendation control corresponding to the second target resource push information, to display the second target resource push information on the viewing client in response to a triggering operation for the resource recommendation control.

In an embodiment of the present disclosure, in a case that the second target resource push information exists, the viewing client is controlled to display the resource recommendation control corresponding to the second target resource push information, to display the second target resource push information on the viewing client in response to the triggering operation for the resource recommendation control. A display style of the resource recommendation control can be set according to an actual scene need, including but not limited to, one or a combination of more of a pattern, an animation, text, a color, and the like.

In an embodiment of the present disclosure, when there is one piece of second target resource push information, as shown in FIG. 8, a corresponding resource recommendation control D1 is displayed on a preset control region of the corresponding viewing client. When it is detected that D1 is triggered, a collection details page corresponding to D1 is displayed. The collection details page includes details of the second target resource push information, a get control, and the like. The collection details page of the second target resource push information is used for providing a get service for a resource corresponding to the second target resource push information.

In an embodiment of the present disclosure, when there is a plurality of pieces of second target resource push information, the plurality of pieces of second target resource push information are sorted to obtain a sorting result. In some possible embodiments, whether the plurality of pieces of second target resource push information have a preset order relationship. The plurality of pieces of second target resource push information are sorted according to the preset order relationship. For example, if the preset order relationship means that second target resource push information 2 needs to be collected after second target resource push information 1 is collected, second target resource push information 2 is sorted after the second target resource push information 1. If the plurality of pieces of second target resource push information do not have the preset order relationship, the plurality of pieces of second target resource push information can be sorted randomly. After the sorting result is obtained, current second target resource push information is determined according to an order in the sorting result.

For example, historical second target resource push information corresponding to a last collection request is determined; in a case that the historical second target resource push information does not exist, the first piece of second target resource push information in the sorting result is determined to be the current second target resource push information; and in a case that the historical second target resource push information exists, and the historical second target resource push information is not the last piece of second target resource push information in the sorting result, a next piece of second target resource push information of the historical second target resource push information in the sorting result is determined to be the current second target resource push information. Namely, in this embodiment, the resource recommendation controls of the plurality of pieces of second target resource push information are displayed in sequence in the preset control region on the same live streaming interface, which improves the convenience of operation.

Further, after the current second target resource push information is determined, the viewing client is controlled to display the resource recommendation control of the current second target resource push information in the preset control region on the live streaming interface. In response to a triggering operation for the resource recommendation control of the current second target resource push information, the viewing client is controlled to display the second target resource push information. For example, the collection details page containing the second target resource push information can be displayed on the viewing client, and the get control corresponding to the second target resource push information can be displayed on the collection details page. In addition to containing the get control of the second target resource push information, the collection details page can further contain other information, which can be set according to an actual need and will not be listed one by one here. The collection details page can be displayed in any form, such as a pop-up window, a pull-up menu, and the like.

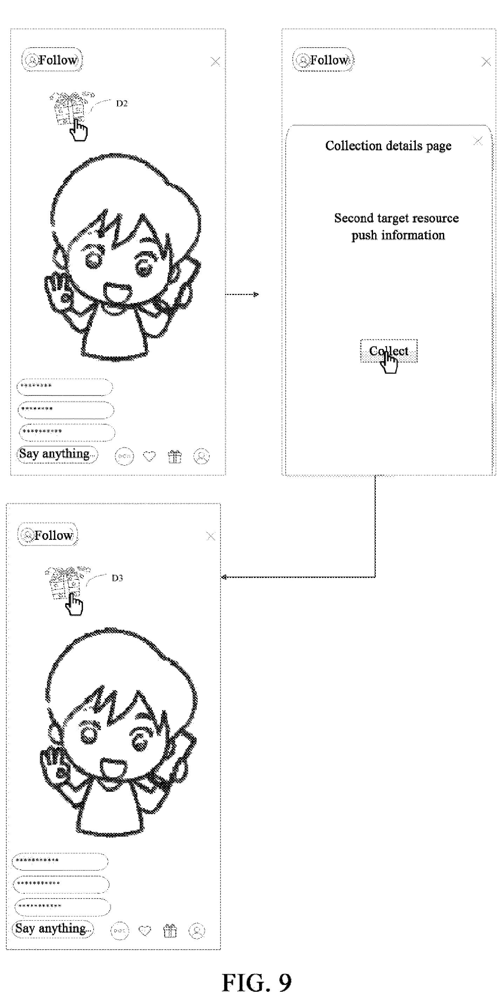

For example, as shown in FIG. 9, when the second target resource push information corresponding to the viewing client is D2 and D3, and the sorting result of D2 and D3 after sorting is that D2 is before D3, the resource recommendation control corresponding to D2 is first displayed in the preset control region (the upper left corner of the live streaming interface in this example) of the viewing client. When the resource recommendation control is triggered, the collection details page of D2 is displayed in the form of a pull-up menu on the live streaming interface. When the get control of the corresponding collection details page is triggered, the collection details page of D2 is closed, and the resource recommendation control of D3 is displayed in the preset control region of the viewing client, thus displaying D2 to D3 in sequence.

In summary, according to the method for resource processing of this embodiment of the present disclosure, after the streamer client issues the resource push information of the target game, the resource recommendation control of the matched resource push information can be displayed on the viewing client, so that the viewing client can get the corresponding resource push information. Different resource push information of the game can be viewed on different viewing clients, which further enhances the push effect on the game.

To implement the above embodiments, the present disclosure further provides an apparatus for resource processing. This apparatus for resource processing is applied to a viewing client.

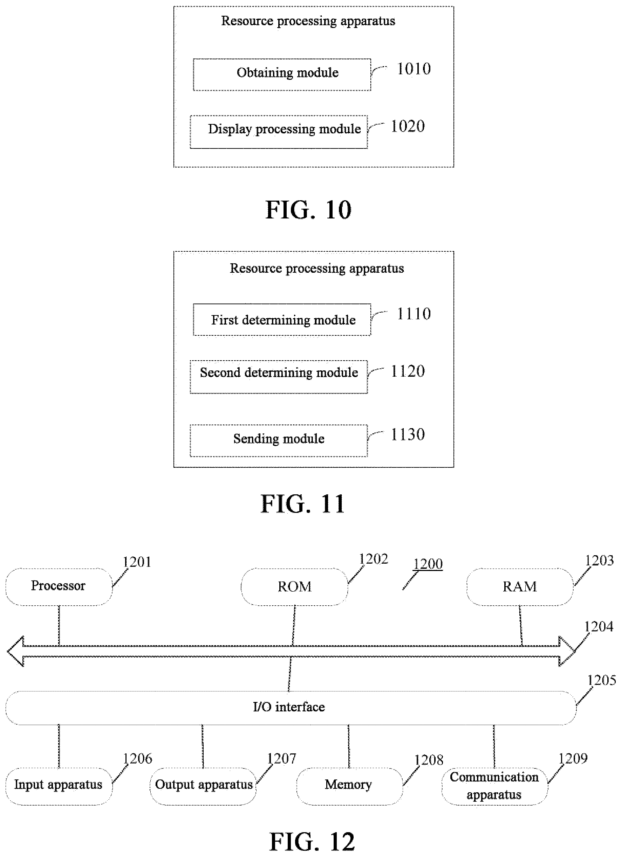

FIG. 10 is a schematic structural diagram of an apparatus for resource processing provided by an embodiment of the present disclosure. The apparatus may be implemented using software and/or hardware and may be usually integrated in an electronic device. As shown in FIG. 10, the apparatus includes: an obtaining module 1010 and a display processing module 1020.

The obtaining module 1010 is configured to obtain first target resource push information of a target game, wherein the first target resource push information is determined according to usage progress information of the viewing client on the target game.

The display processing module 1020 is configured to display the first target resource push information of the target game on a live streaming interface.

The apparatus for resource processing provided by this embodiment of the present disclosure can implement the method for resource processing applied to the viewing client and provided in any embodiment of the present disclosure, and includes corresponding functional modules for implementing the method and corresponding beneficial effects.

To implement the above embodiments, the present disclosure further provides an apparatus for resource processing. The apparatus for resource processing is applied to a server.

FIG. 11 is a schematic structural diagram of an apparatus for resource processing provided by an embodiment of the present disclosure. The apparatus may be implemented using software and/or hardware and may be usually integrated in an electronic device. As shown in FIG. 11, the apparatus includes: a first determining module 1110, a second determining module 1120, and a sending module 1130.

The first determining module 1110 configured to: in a case that a first resource push instruction from a streamer client for a target game, determine usage progress information of a viewing client on the target game.

The second determining module 1120 is configured to determine first target resource push information of the target game according to the usage progress information.

The sending module 1130 is configured to send the first target resource push information to the viewing client.

The apparatus for resource processing provided by this embodiment of the present disclosure can implement the method for resource processing applied to a server and provided in any embodiment of the present disclosure, and includes corresponding functional modules for implementing the method and corresponding beneficial effects.

To achieve the above embodiments, the present disclosure further provides a computer program product, including computer programs/instructions. The computer programs/instructions, when run by a processor, implement the method for resource processing in the above embodiment.

FIG. 12 is a schematic structural diagram of an electronic device according to the embodiments of the present disclosure.

Reference is specifically now made to FIG. 12 below, which illustrates a schematic structural diagram of an electronic device 1200 suitable for implementing the embodiments of the present disclosure. The electronic device 1200 in this embodiment of the present disclosure may include but is not limited to a mobile terminal such as a mobile phone, a laptop, a digital broadcast receiver, a Personal Digital Assistant (PDA), a PAD, a Portable Multimedia Player (PMP), an in-vehicle terminal (e.g. an in-vehicle navigation terminal), and a fixed terminal such as a digital TV and a desktop computer. The electronic device shown in FIG. 12 is only an example and should not impose any limitations on the functionality and scope of use of the embodiments of the present disclosure.

As shown in FIG. 12, the electronic device 1200 may include a processor (such as a central processing unit and graphics processing unit) 1201 that can perform various appropriate actions and processing according to programs stored in a Read-Only Memory (ROM) 1202 or loaded from a memory 1208 to a Random Access Memory (RAM) 1203. Various programs and data required for operations of the electronic device 1200 may also be stored in the RAM 1203. The processor 1201, the ROM 1202, and the RAM 1203 are connected to each other through a bus 1204. An Input/Output (I/O) interface 1205 is also connected to the bus 1204.

Usually, following apparatuses can be connected to the I/O interface 1205: an input apparatus 1206 including a touch screen, a touchpad, a keyboard, a mouse, a camera, a microphone, an accelerometer, a gyroscope, and the like; an output apparatus 1207 including a Liquid Crystal Display (LCD), a speaker, a vibrator, and the like; the memory 1208 including a magnetic tape, a hard disk drive, and the like; and a communication apparatus 1209. The communication apparatus 1209 can allow the electronic device 1200 to wirelessly or wiredly communicate with other devices to exchange data. Although FIG. 12 shows the electronic device 1200 with multiple apparatuses, it should be understood that the electronic device 1200 is not required to implement or have all the apparatuses shown, and can alternatively implement or have more or fewer apparatuses.

Particularly, according to the embodiments of the present disclosure, the process described in the reference flowchart above can be implemented as a computer software program. For example, the embodiments of the present disclosure include a computer program product, including a computer program carried on a non-transitory computer-readable medium, and the computer program includes program codes used for performing the methods shown in the flowcharts. In such an embodiment, the computer program may be downloaded and installed from a network through the communication apparatus 1209, or installed from the memory 1208, or installed from the ROM 1202. When the computer program is run by the processor 1201, the above-mentioned functions defined in the method for resource processing of the embodiments of the present disclosure are executed.

It should be noted that the computer-readable medium mentioned in the present disclosure can be a computer-readable signal medium, a computer-readable storage medium, or any combination of the computer-readable signal medium and the computer-readable storage medium. The computer-readable storage medium can be, for example, but not limited to, electric, magnetic, optical, electromagnetic, infrared, or semiconductor systems, apparatuses, or devices, or any combination of the above. More specific examples of the computer-readable storage medium may include, but are not limited to: an electrical connection with one or more wires, a portable computer disk, a hard disk drive, a RAM, a ROM, an Erasable Programmable Read Only Memory (EPROM) or flash memory, an optical fiber, a Compact Disc Read-Only Memory (CD-ROM), an optical storage device, a magnetic storage device, or any suitable combination of the above. In the present disclosure, the computer-readable storage medium may be any tangible medium that contains or stores a program, and the program can be used by or in combination with an instruction execution system, apparatus, or device. In the present disclosure, the computer-readable signal media may include data signals propagated in a baseband or as part of a carrier wave, which carries computer-readable program codes. The propagated data signals can be in various forms, including but not limited to: electromagnetic signals, optical signals, or any suitable combination of the above. The computer-readable signal medium may also be any computer-readable medium other than a computer-readable storage medium. The computer-readable signal medium can send, propagate, or transmit programs for use by or in combination with an instruction execution system, apparatus, or device. The program codes contained in the computer-readable medium can be transmitted using any suitable medium, including but are not limited to: a wire, an optical cable, a Radio Frequency (RF), and the like, or any suitable combination of the above.

In some implementations, clients and servers can communicate using any currently known or future developed network protocol such as a HyperText Transfer Protocol (HTTP), and can intercommunicate and be interconnected with digital data in any form or medium (for example, a communication network). Examples of the communication network include a Local Area Network (LAN), a Wide Area Network (WAN), an internet (such as an Internet), a point-to-point network (such as an ad hoc point-to-point network, and any currently known or future developed network.

The computer-readable medium may be included in the electronic device or exist alone and is not assembled into the electronic device.

The above computer-readable medium carries one or more programs. The above one or more programs, when run by the electronic device, cause the electronic device to: obtain first target resource push information of a target game, wherein the first target resource push information is determined according to usage progress information of the viewing client on the target game; and display the first target resource push information of the target game on a live streaming interface. In the embodiments of the present disclosure, the corresponding first target resource push information is displayed according to the usage progress information of the viewing client, so that matching between the first target resource push information and the usage progress information is ensured. First target resource push information viewed from different viewing clients may be different, thereby enhancing a push effect on a game. Or, after a streamer client issues resource push information of a target game, a resource recommendation control of matched resource push information can be displayed on a viewing client, so that the viewing client can get the corresponding resource push information. Different resource push information of the game can be viewed on different viewing clients, which further enhances the push effect on the game. Or, usage progress information of a viewing client on a target game is determined in a case that a first resource push instruction from a streamer client for the target game has been received, the first target resource push information of the target game is determined according to the usage progress information, and the first target resource push information is sent to the viewing client. In the embodiments of the present disclosure, the corresponding first target resource push information is generated according to the usage progress information of the viewing client, so that matching between the first target resource push information and the usage progress information is ensured. First target resource push information viewed from different viewing clients may be different, thereby enhancing a push effect on a game.

The electronic device can write computer program codes for performing the operations of the present disclosure in one or more programming languages or a combination thereof. The above programming languages include but are not limited to an object-oriented programming language such as Java, Smalltalk, and C++, and conventional procedural programming languages such as "C" language or similar programming languages. The program codes may be executed entirely on a user computer, partly on a user computer, as a stand-alone software package, partly on a user computer and partly on a remote computer, or entirely on a remote computer or a server. In a case where a remote computer is involved, the remote computer can be connected to a user computer through any kind of networks, including a LAN or a WAN, or can be connected to an external computer (for example, through an Internet using an Internet service provider).

The flowcharts and block diagrams in the accompanying drawings illustrate possible system architectures, functions, and operations that may be implemented by a system, a method, and a computer program product according to various embodiments of the present disclosure. In this regard, each block in a flowchart or a block diagram may represent a module, a program, or a part of a code. The module, the program, or the part of the code includes one or more executable instructions used for implementing specified logic functions. In some implementations used as substitutes, functions annotated in blocks may alternatively occur in a sequence different from that annotated in an accompanying drawing. For example, actually two blocks shown in succession may be performed basically in parallel, and sometimes the two blocks may be performed in a reverse sequence. This is determined by a related function. It is also be noted that each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction.

The units described in the embodiments of the present disclosure can be implemented through software or hardware. The name of the unit does not constitute a limitation on the unit itself in a situation.

The functions described herein above may be performed, at least in part, by one or a plurality of hardware logic components. For example, nonrestrictively, example hardware logic components that can be used include: a Field Programmable Gate Array (FPGA), an Application Specific Integrated Circuit (ASIC), Application Specific Standard Parts (ASSP), a System on Chip (SOC), a Complex Programmable Logic Device (CPLD), and the like.

In the context of the present disclosure, a machine-readable medium may be a tangible medium that may include or store a program for use by an instruction execution system, apparatus, or device or in connection with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above content. More specific examples of the machine-readable medium may include an electrical connection based on one or more wires, a portable computer disk, a hard disk drive, a RAM, a ROM, an EPROM or flash memory, an optical fiber, a CD-ROM, an optical storage device, a magnetic storage device, or any suitable combinations of the above contents.

The above description is only for explaining the preferred embodiments of the present disclosure and technical principles used in the embodiments. Those skilled in the art should understand that the scope of disclosure referred to in the present disclosure is not limited to the technical solutions formed by specific combinations of the aforementioned technical features, but also covers other technical solutions formed by any combinations of the aforementioned technical features or their equivalent features without departing from the concept of the above disclosure, for example, a technical solution formed by replacing the above features with (but not limited to) technical features with similar functions disclosed in the present disclosure.

In addition, although various operations are depicted in a specific order, this should not be understood as requiring these operations to be executed in the specific order shown or in a sequential order. In certain environments, multitasking and parallel processing may be advantageous. Similarly, although several specific implementation details are included in the above discussion, these should not be interpreted as limiting the scope of the present disclosure. Some features described in the context of individual embodiments can also be combined and implemented in a single embodiment. On the contrary, various features that are described in the context of the single embodiment may also be implemented in a plurality of embodiments separately or in any suitable sub-combinations.

Although the subject matter has been described in a language specific to structural features and/or method logical actions, it should be understood that the subject matter limited in the attached claims may not necessarily be limited to the specific features or actions described above. On the contrary, the specific features and actions described above are only exemplary forms for implementing the claims.

## Claims

1. A method for resource processing, applied to a viewing client, and comprising:
obtaining first target resource push information of a target game, wherein the first target resource push information is determined according to usage progress information of the viewing client on the target game; and
displaying the first target resource push information of the target game on a live streaming interface.

2. The method according to claim 1, further comprising:
displaying a resource collection interface corresponding to the target game in response to a triggering operation for the first target resource push information.

3. The method according to claim 2, wherein resource details corresponding to the first target resource push information and a resource collection control corresponding to the first target resource push information are displayed on the resource collection interface; and
obtaining a resource corresponding to the first target resource push information in response to a triggering operation for the resource collection control.

4. The method according to claim 1, further comprising:
displaying a game interaction control of the target game on the live streaming interface, and displaying a game presentation interface corresponding to the target game in response to a triggering operation for the game interaction control; and
displaying a resource collection entry corresponding to the first target resource push information on the game presentation interface, wherein the resource collection entry is used for collecting a resource corresponding to the first target resource push information.

5. The method according to claim 1, wherein displaying the first target resource push information of the target game on the live streaming interface comprises:
in response to the usage progress information being first usage progress information, displaying a first usage progress identifier on the live streaming interface; and
in response to obtaining a first resource corresponding to the first usage progress information, switching the first usage progress identifier into prompt information for collecting a second resource, wherein the second resource is a resource corresponding to second usage progress information, and the second usage progress information is next progress information adjacent to the first usage progress.

6. The method according to claim 1, wherein displaying the first target resource push information of the target game on the live streaming interface comprises:
in response to the usage progress information being first usage progress information, displaying a first usage progress identifier on the live streaming interface; and
in response to the usage progress information being updated to second usage progress information, switching the first usage progress identifier into a second usage progress identifier.

7. A method for resource processing, applied to a server and comprising the following steps:
in a case that a first resource push instruction from a streamer client for a target game has been received, determining usage progress information of a viewing client for the target game;
determining first target resource push information of the target game according to the usage progress information; and
sending the first target resource push information to the viewing client.

8. The method according to claim 7, further comprising:
in response to a second resource push instruction from the streamer client for the target game, determining at least one piece of candidate resource push information corresponding to the second resource push instruction;
determining, from the at least one piece of candidate resource push information, second target resource push information matched with the viewing client; and
in a case that the second target resource push information exists, controlling the viewing client to display a resource recommendation control corresponding to the second target resource push information, to display the second target resource push information on the viewing client in response to a triggering operation for the resource recommendation control.

9. The method according to claim 8, wherein determining, from the at least one piece of candidate resource push information, the second target resource push information matched with the viewing client comprises:
obtaining reference usage progress information corresponding to each piece of candidate resource push information; and
matching the reference usage progress information with the usage progress information of the viewing client to determine the candidate resource push information corresponding to successfully matched reference usage progress information to be the second target resource push information.

10. The method according to claim 8, wherein in response to a plurality of pieces of second target resource push information existing, controlling the viewing client to display the resource recommendation control corresponding to the second target resource push information comprises:
determining current second target resource push information according to an order in a sorting result, wherein the sorting result comprises the plurality of pieces of second target resource push information after sorting;
controlling a preset control region of the viewing client on a live streaming interface to display the resource recommendation control of the current second target resource push information; and
controlling, in response to the triggering operation for the resource recommendation control, the viewing client to display the second target resource push information, comprising:
in response to the triggering operation for the resource recommendation control of the current second target resource push information, controlling the viewing client to display a collection details page that contains the second target resource push information, to make a response, on the collection details page, to a collection request for the second target resource push information.

11. The method according to claim 8, wherein determining the current second target resource push information according to the order in the sorting result comprises:
determining historical second target resource push information corresponding to a last collection request;
in a case that the historical second target resource push information does not exist, determining the first piece of second target resource push information in the sorting result to be the current second target resource push information; and
in a case that the historical second target resource push information exists, and the historical second target resource push information is not the last piece of second target resource push information in the sorting result, determining a next piece of second target resource push information of the historical second target resource push information in the sorting result to be the current second target resource push information.

12. An apparatus for resource processing, wherein the apparatus is applied to a viewing client and comprises:
an obtaining module, configured to obtain first target resource push information of a target game, wherein the first target resource push information is determined according to usage progress information of the viewing client on the target game; and
a display processing module, configured to display the first target resource push information of the target game on a live streaming interface.

13. An apparatus for resource processing, wherein the apparatus is applied to a server and comprises:
a first determining module, configured to: in a case that a first resource push instruction from a streamer client for a target game, determine usage progress information of a viewing client on the target game;
a second determining module, configured to determine first target resource push information of the target game according to the usage progress information; and
a sending module, configured to send the first target resource push information to the viewing client.

14. An electronic device, wherein the electronic device comprises:
a processor; and
a memory configured to store instructions executable by the processor,
wherein the processor is configured to: read the executable instructions from the memory and execute the executable instructions to implement the method for push processing according to any of claims 1 to 11.

15. A computer-readable storage medium, having a computer program stored thereon, wherein the computer program is used for performing the method for push processing according to any of claims 1 to 11.

16. A computer program product, wherein instructions in the computer program product, when executed by a processor, implement the method for push processing according to any of claims 1 to 11.
